# EUROPÄISCHE PATENTSCHRIFT

(11) **EP 1 896 551 B1**
(45) Veröffentlichungstag und Bekanntmachung des Hinweises auf die Patenterteilung: **10.12.2008**
(21) Anmeldenummer: 06792466.2
(22) Anmeldetag: 27.06.2006
(51) Int. Cl.: C09K 11/77, G06K 19/14, C09D 11/00

(54) **HOLMIUMDOTIERTE ANTI-STOKES-LEUCHTSTOFFE UND SICHERHEITSMERKMALE MIT DIESEN LEUCHTSTOFFEN**
HOLMIUM-DOPED ANTI-STOKES LUMINESCENT MATERIALS AND SECURITY FEATURES WITH THESE LUMINESCENT MATERIALS
SUBSTANCES LUMINESCENTES ANTI-STOKES DOPEES A L'HOLMIUM ET CARACTERISTIQUES DE SECURITE CONTENANT CES SUBSTANCES LUMINESCENTES

(30) Priorität: 30.06.2005 DE 102005030920; 12.07.2005 DE 102005032831
(43) Veröffentlichungstag der Anmeldung: 12.03.2008
(73) Patentinhaber: Bundesdruckerei GmbH, 10969 Berlin (DE); Leuchtstoffwerk Breitungen GmbH, 98597 Breitungen (DE)
(72) Erfinder: BAILLEU, Anett, 13127 Berlin (DE); GRAMMLICH, Daniel, 72124 Piezhausen (DE); PAESCHKE, Manfred, 16352 Basdorf (DE); MUTH, Oliver, 12277 Berlin (DE); STARICK, Detlef, 36448 Bad Liebenstein (DE); KEMPFERT, Wolfgang, 36448 Bad Liebenstein (DE); NIGGEMANN, Matthias, 50939 Köln (DE)
(74) Vertreter: Engel, Christoph Klaus
(86) Internationale Anmeldenummer: PCT/EP2006/063583
(87) Internationale Veröffentlichungsnummer: WO 2007/003531

(56) Entgegenhaltungen:
- EP-A- 0 143 034
- EP-A- 0 147 252
- GB-A- 2 258 659

## Beschreibung

Die vorliegende Erfindung betrifft einen Leuchtstoff, der bei entsprechender Anregung Anti-Stokes-Lumineszenz und gleichzeitig Lumineszenz nach der Stokesschen Regel zeigt. Weiterhin betrifft die Erfindung eine Leuchtstoffmischung aus mindestens zwei Leuchtstoffkomponenten, jeweils mit Anti-Stokes-Lumineszenz, die ein spezielles Emissionsspektrum aufweist, welches die Leuchtstoffmischung für die Anwendung in Sicherheitsmerkmalen prädestiniert. Die Erfindung betrifft gleichzeitig die Anwendung des einzelnen Leuchtstoffes und der genannten Leuchtstoffmischung für die Bereitstellung eines Sicherheitsmerkmals, welches für die Echtheitskennzeichnung von Wert- und Sicherheitsdokumenten benutzt werden kann.

Sicherheitsmerkmale können beispielsweise an Sicherheitserzeugnissen angebracht sein, worunter Wert- und Sicherheitsdokumente wie Banknoten, Schecks, Kreditkarten, Aktien, Pässe, Ausweisdokumente, Führerscheine, Eintrittskarten, Wertmarken, Pfandmarken, Etiketten, Verpackungsmaterialien, Verpackungsaufdrucke, Siegel und dergleichen zu verstehen sind. Sicherheitsmerkmale finden ebenso an zu sichernden Gegenständen des alltäglichen Gebrauchs Anwendung, wie beispielsweise Bekleidung, Schuhe, Textilien, Haushaltsartikel, Elektronikartikel und ähnliche, wobei das Sicherheitsmerkmal unmittelbar auf dem Gegenstand angebracht bzw. in jenen integriert sein kann. Das Sicherheitsmerkmal kann vollflächig oder partiell aufgebracht werden. In der einfachsten Variante geschieht dies mit Hilfe einer Druckfarbe in einem gängigen Druckverfahren.

Aus der DE 101 13 267 A1 ist ein Anti-Stokes-Leuchtstoff für die Anwendung in Sicherheitsdokumenten bekannt. Der dem Fachmann generell bekannte Anti-Stokes-Lumineszenzeffekt, bei welchem die Wellenlänge einer vom Leuchtstoff emittierten elektromagnetischen Strahlung kleiner ist als die Wellelänge der absorbierten elektromagnetischen Strahlung, wird hierbei durch eine geeignete Konzentration von Absorberionen und Emitterionen so eingestellt, dass entsprechende Ankling- und Abklingzeiten für die Anti-Stokes-Lumineszenz erreicht werden, die eine automatische Detektion mit hoher Geschwindigkeit gestatten. Bei dem in dieser Druckschrift beschriebenen Leuchtstoff handelt es sich um ein Gadoliniumoxysulfid, welches mit Ytterbium als Absorber und Thulium als Emitter dotiert ist. Der Druckschrift lässt sich weiterhin entnehmen, dass an Stelle des Gadoliniums anteilig auch Yttrium, Lanthan oder Lutetium als Grundgittermaterial eingesetzt werden können.

Aus der DE 101 13 266 A1 ist ein Sicherheitsdokument bekannt, welches Leuchtstoffpartikel mit Anti-Stokes-Lumineszenz enthält. Es handelt sich auch hierbei um ein Thulium aktiviertes und Ytterbium kodotiertes Gadoliniumoxysulfid. Zweck der speziellen Implementierung der Leuchtstoffpartikel in oberflächennahen Schichten eines Sicherheitsdokumentes ist die Ermöglichung einer Hochgeschwindigkeitsdetektion. Die speziellen Leuchtstoffe gestatten zwar in besonders angepassten Lesegeräten eine hohe Detektionsgeschwindigkeit, ermöglichen jedoch nicht eine Überprüfung des Sicherheitsmerkmals durch entfernt liegende Sensoren.

Das Dokument GB2258659 A beschreibt mit Erbium und/oder Ytterbium dotierte Ytterium oxysulfid leuchtstoffe.

Aus der DE 101 13 268 A1 sind ein Verfahren und ein Sensor für die Echtheitserkennung von Sicherheitsdokumenten bekannt. Dabei wird das Sicherheitselement mit einer voreingestellten Anregungswellenlänge bestrahlt, und die daraufhin von den im Sicherheitsdokument enthaltenen Leuchtstoffen emittierte Strahlung wird nachfolgend von einer Auswerteeinheit erfasst. Die Auswertung der emittierten Strahlung erfolgt nur in einem vorgegebenen Wellenlängenbereich und über einen vorgegebenen Zeitraum nach der Anregung. Auf dieser Weise können Strahlungsspektren ausgeschlossen werden, die zwar vergleichbare Wellenlängen aufweisen, jedoch andere An- und Abklingzeiten zeigen.

Die Vor- und Nachteile der Anwendung von Leuchtstoffen zum Echtheitsnachweis von Sicherheitsmerkmalen sind dem Fachmann hinlänglich bekannt. Nachteilig ist vor allem, dass die Zahl der verfügbaren, mit hoher Effizienz (Strahlungsausbeute) lumineszierenden Materialien begrenzt ist. Wirkungsvolle Luminophore werden deshalb häufig auch in anderen technischen Bereichen eingesetzt, was dazu beiträgt, dass ihre Eigenschaften (z.B. ihre Emissionsspektren) zumeist gut bekannt und in der Fachliteratur ausführlich beschrieben sind. Derartige Leuchtstoffe können ggf. auch von nicht autorisierten Personen beschafft und zur Fälschung von Wert- und Sicherheitsdokumenten verwendet werden. Prinzipiell sind natürlich auch der Vielfalt von Emissionsspektren von Leuchtstoffen Grenzen gesetzt.

Die vorliegende Erfindung zielt daher darauf ab, diese Grenzen wesentlich zu erweitern und die Möglichkeiten für einen effektiven Fälschungsschutz mit Hilfe lumineszierender Sicherheitsmerkmale deutlich zu verbessern.

Eine erste Aufgabe der vorliegenden Erfindung besteht daher darin, einen alternativen Leuchtstoff für den Einsatz in Sicherheitsdokumenten bereitzustellen, der im Falle eines Fälschungsversuchs nur schwer imitiert werden kann und damit hohen Sicherheitsanforderungen genügt. Eine Teilaufgabe der Erfindung besteht außerdem darin, eine Leuchtstoffmischung anzugeben, die ein Emissionsspektrum aufweist, welches ohne nähere Untersuchungen nicht direkt auf die enthaltenen Leuchtstoffanteile schließen lässt. Schließlich besteht eine Teilaufgabe der vorliegenden Erfindung darin, einen in Sicherheitsmerkmalen einsetzbaren Leuchtstoff bzw. eine entsprechende Leuchtstoffmischung anzugeben, die mit angepassten Lesegeräten eine schnelle Detektion des Sicherheitsmerkmals auch unter ungünstigen Umgebungsbedingungen, insbesondere bei einem großen Abstand zwischen Sicherheitsmerkmal und Sensor gestattet.

Diese und weitere Aufgaben werden durch die in den beigefügten nebengeordneten Ansprüchen definierten Leuchtstoffe und Sicherheitsmerkmale erfüllt. In den abhängigen Unteransprüchen sind bevorzugte Ausführungsformen dieser Gegenstände angegeben.

Der erfindungsgemäße Leuchtstoff zeigt überraschenderweise eine Reihe von Eigenschaften, die ihn für die Anwendung in Sicherheitsmerkmalen im oben genannten Sinne auszeichnen.

Die Erfindung basiert u.a. auf der Überlegung, dass insbesondere solche Leuchtstoffe als Sicherheitsmerkmale geeignet sind, bei denen sich die charakteristischen Spektren durch Variation der Leuchtstoffzusammensetzung sowie der Art und der Konzentration der Dotierungselemente (Aktivatoren) in einer selbst für den Leuchtstofffachmann unvorhersehbaren Weise verändern und einstellen lassen.

Der Leuchtstoff umfasst in seiner chemischen Zusammensetzung und Struktur ein Oxysulfid-Wirtsgitter der seltenen Erden (Seltenerdoxysulfide), welches für die Erzeugung von Anti-Stokes-Lumineszenz mit Ytterbium und Holmium codotiert ist. Dabei fungiert Yb³⁺ als Absorber-Ion und Ho³⁺ wirkt als Emitter-Ion. Bei Anregung im nahen Infrarot-Spektralbereich (NIR-Anregung) emittieren Ytterbium/Holmium coaktivierte Seltenerdoxysulfide eine Anti-Stokes-Strahlung im energiereicheren sichtbaren Spektralbereich (VIS-Emission durch Up-Conversion). Gleichzeitig tritt eine Emission nach der Stokesschen Regel im Infrarotbereich auf (Down-Conversion). Dabei kann das Verhältnis der beiden unterschiedlichen Emissionen durch Wahl der Dotierungskonzentrationen in weiten Bereichen verändert und eingestellt werden.

Als Anregungsstrahlung kommt insbesondere eine Laserstrahlung mit einer Wellenlänge von 950 bis 980 nm zum Einsatz. Es kann sowohl gepulste als auch stationäre Laserstrahlung verwendet werden, wobei durch unterschiedliche Anregungsimpulse auch eine gezielte Auswertung von An- und Abklingzeiten der Leuchtreaktion/Lumineszenz möglich wird.

Ytterbium/Holmium coaktivierte Seltenerdoxysulfide des erfindungsgemäßen Leuchtstoffs lassen sich durch die folgende allgemeine Formel beschreiben:

(SE_{1-x-y})₂O₂S:Ybₓ, Ho_{y}

wobei SE = mindestens eines der Metalle Y, La, Gd, Lu allein oder in Kombination
und 0,01 < x < 0,8
0,0001 < y < 0,1

Gemäß einer besonderen Ausführungsform wird eine Leuchtstoffmischung bereitgestellt, die mehrere Komponenten des durch die zuvor genannte Formel definierten Leuchtstoffs enthält, die sich durch verschiedene Dotierungskonzentrationen voneinander unterscheiden. Damit ist es möglich, Komponenten mit verschiedenen Emissionsspektren zu erzeugen und diese zu einem Leuchtstoff zu mischen, der neuartige Leuchteigenschaften aufweist. Beispielsweise kann eine Komponente so dotiert werden, dass bei Anregung eine vergleichsweise starke Emission im IR-Bereich auftritt, während die andere Komponente so dotiert wird, dass eine starke Emission im VIS-Bereich erzeugt wird.

Eine hohe Emissionseffizienz im VIS-Berich mit vergleichsweise geringer NIR-Emission wird z.B. durch folgenden Leuchtstoff erreicht:

(Gd_{1-x-y})₂O₂S:Ybₓ,Ho_{y} wobei x=0,10 und y=0,001

Währenddessen eine hohe Emissionseffizienz im NIR-Bereich mit vergleichsweise geringer VIS-Emission auftritt, bei einem Leuchtstoff:

(Gd_{1-x-y})₂O₂S:Ybₓ,Ho_{y} wobei x=0,30 und y=0,015

Die Leuchtstoffmischung derartiger Komponenten wird dann sowohl im IR- als auch im VIS-Bereich starke Emissionen zeigen, was mit einem nur aus einer Komponente bestehenden Leuchtstoff nicht erreichbar ist. Weitere Mischungen unter abweichenden Zielstellungen sind möglich.

Eine weitere Abwandlung ergibt sich durch die Kombination derartiger Leuchtstoffe mit Ytterbium/Erbium coaktivierten Seltenerdoxysulfiden und/oder Ytterbium/Thulium coaktivierten Seltenerdoxysulfiden.

Eine bevorzugte Ausführungsform der Erfindung, wird durch die Mischung von SE₂O₂S:Yb,Ho und SE₂O₂S:Yb,Er erreicht. Dabei entsteht bei NIR-Anregung ein VIS-Emissionsspektrum der Anti-Stokes-Lumineszenz mit einem Peak-Triplett der Emission im grünen Spektralbereich.

Der beschriebene Leuchtstoff bzw. dessen Mischungsbestandteile wird in der Korngrößenverteilung auf die jeweilige Applikation in unterschiedlichen Sicherheitsmerkmalen angepasst und liegt vorzugsweise im Bereich von 1,0 µm < d₅₀ < 30µm.

Weitere Einzelheiten, Vorteile und Weiterbildungen der vorliegenden Erfindung ergeben sich aus der nachfolgenden Beschreibung bevorzugter Ausführungsformen, unter Bezugnahme auf die Zeichnung. Es zeigen:
- Fig. 1: ein Emissionsspektrum (λₑₘ = 400 ... 1600 nm) eines mit Ytterbium und Holmium codotierten Gadoliniumoxysulfids, bei schmalbandiger NIR- Anregung (Übersichtsspektrum);
- Fig. 2: ein schematisches Emissionsspektrum (λₑₘ = 500 ... 600 nm) eines Leuchtstoffs, der zwei Leuchtstoffkomponenten enthält, jeweils basierend auf einem Wirtsgitter aus Gadoliniumoxysulfid und dotiert mit Ytterbium und Holmium bzw. Ytterbium und Erbium, bei schmalbandiger NIR-Anregung (spektral aufgelöstes Spektrum);
- Fig. 3: eine Prinzipdarstellung einer Vorrichtung zur Echtheitserkennung von Sicherheitsmerkmalen.

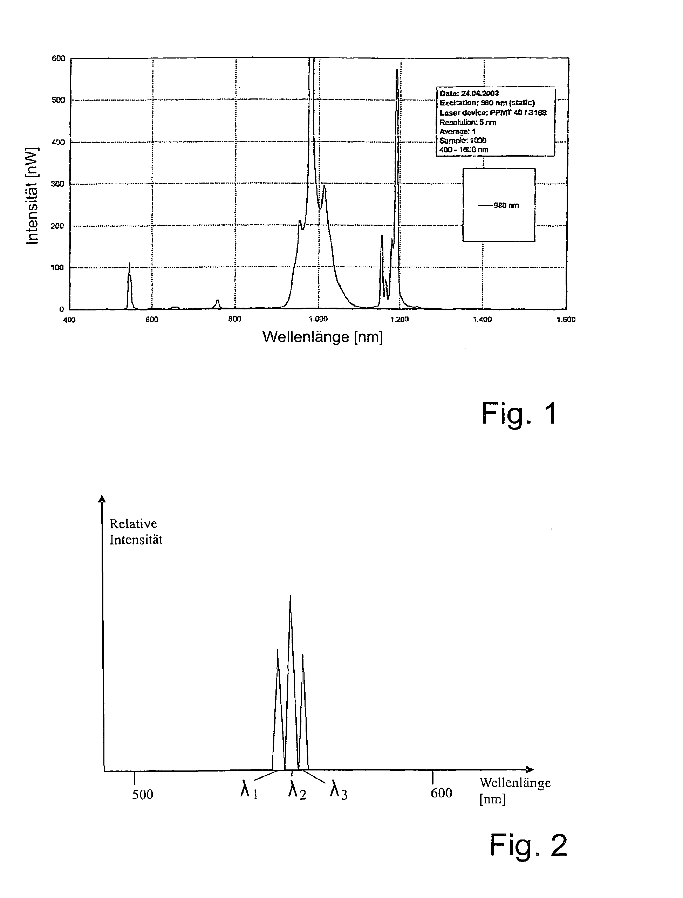

In Fig. 1 ist ein Emissionsspektrum eines Leuchtstoffs Gd₂O₂S:Yb,Ho bei 980 nm Anregung mit Up-Conversion-Emission (λₑₘ = 400 ... <980 nm) und Down-Conversion-Emission (λₑₘ = >980 ... 1600 nm) dargestellt. Aus dem Spektrum ist ersichtlich, dass eine der Stokesschen Regel folgende Emission im Bereich zwischen 1.100 und 1.250 nm (Down-Conversion-Emission) auftritt. Weiterhin wird ein Emissionsmaximum im grünen Wellenlängenbereich bei etwa 550 nm (Up-Conversion-Emission) gefunden.

Die Anregung des Leuchtstoffs kann vorzugsweise mit einem Laser erfolgen. In diesem Zusammenhang sei angemerkt, dass sich ein vergleichbares Emissionsspektrum auch bei einer Anregung mit einer Strahlung von 950 nm zeigt.

Für die Auswertung des in ein Sicherheitsmerkmal integrierten Leuchtstoffs kann man sowohl die Emission bei 1.190 nm als auch das Maximum bei etwa 550 nm berücksichtigen. Dafür werden vorzugsweise unterschiedliche Detektoren eingesetzt, die in den jeweiligen Wellenlängenbereichen unterschiedliche Empfindlichkeiten besitzen. Zur Detektion der Emission im nahen Infrarotbereich eignen sich insbesondere In-Ga-As-Detektoren, die mindestens um eine Größenordnung empfindlicher sind als die früher häufig eingesetzten PbS-Detektoren.

Die Auswertung der Emission bei etwa 1.190 nm stellt eine bisher bei Anti-Stokes-Leuchtstoffen kaum beachtete Möglichkeit dar, jedoch ist ihre Auswertung neben der Up-Conversion-Emission für die Überprüfung von Sicherheitsmerkmalen sinnvoll. Da das Verhältnis dieser Emissionen in der oben beschriebenen Weise verändert werden kann, lassen sich für Sicherheitsanwendungen nahezu beliebig viele Emissionsverhältnisse definieren, die neben dem reinen Auftreten einer Emission in bestimmten Spektralbereichen als weiteres Prüfkriterium dienen können.

Weiterhin ist festzustellen, dass die Emission eines Leuchtstoffs mit der allgemeinen Formel SE₂O₂S:Yb,Ho visuell als grüne Lumineszenz wahrgenommen wird. Der aus verschiedenen technischen Anwendungen bekannte, mit Ytterbium/Erbium codotierte Leuchtstoff SE₂O₂S:Yb,Er zeigt ebenfalls eine grüne Lumineszenz bei NIR-Anregung und erzeugt im Übersichtspektrum (400 ... 1.600 nm) ebenfalls ein Maximum der Up-Conversion-Emission bei etwa 550 nm. Beide Leuchtstoffe, das Ytterbium/Holmium codotierte SE₂O₂S:Yb,Ho und das Ytterbium/Erbium codotierte SE₂O₂S:Yb,Er sind hinsichtlich der Emission mit bloßem Auge oder schwach auflösenden optischen Hilfsmitteln praktisch nicht voneinander zu unterscheiden. Bei höherer spektraler Auflösung werden für beide Leuchtstoffe Linienspektren mit Doppel-Peaks zwischen 540 und 560 nm gefunden.

Eine besonders bevorzugte Ausführungsform des Leuchtstoffes zeichnet sich nun dadurch aus, dass dieser Leuchtstoff zwei Leuchtstoffkomponenten umfasst, die auf demselben Wirtsgitter basieren (Gadoliniumoxysulfid), jeweils mit Ytterbium als Absorberion dotiert sind und sich nur dadurch unterscheiden, dass einerseits Holmium und andererseits Erbium als Codotanten verwendet werden (Gd₂O₂S:Yb,Ho + Gd₂O₂S:Yb,Er).

Fig. 2 zeigt schematisch ein hoch aufgelöstes Emissionsspektrum einer bevorzugten Ausführungsform des erfindungsgemäßen Leuchtstoffes. Anstelle der zuvor beschriebenen Doppel-Peaks mit λ₁ und λ₂ bei Codotierung Yb/Ho bzw. λ₂ und λ₃ bei Codotierung Yb/Er tritt nun ein Triplett mit den Wellenlängen-Peaks λ₁, λ₂ und λ₃ auf. Dieses Triplett ist nur beim Einsatz hochauflösender Sensoren, hocheffizienter Leuchtstoffe (mit hohen Quantenausbeuten) und ausreichenden Leuchtstoffkonzentrationen überhaupt nachweisbar. Mit bloßem Auge dagegen, ist lediglich eine grüne Lumineszenz sichtbar, und weniger auflösende Sensoren bzw. niedrige Leuchtstoffkonzentrationen (z.B. in Druckfarben) ergeben nur ein einzelnes Emissionsmaximum im grünen Wellenlängenbereich.

Je nach Zusammensetzung des erfindungsgemäßen Leuchtstoffes lassen sich beliebig viele Intensitätsverhältnisse der Emissions-Maxima λ₁, λ₂ und λ₃ untereinander einstellen. Die gewünschten Werte lassen sich sowohl durch die Konzentrationsverhältnisse der Dotanten als auch durch das Verhältnis der beiden sich hinsichtlich der Dotierungsionen unterscheidenden Leuchtstoffe einstellen. Auf diese Weise sind unzählige Variationsmöglichkeiten gegeben, die als Prüfkriterium ausgewählt werden können.

Für den hoch auflösenden Nachweis des Spektrums im genannten Wellenlängenbereich eignen sich beispielsweise Si-Detektoren.

Neben oder anstelle der spektral aufgelösten Detektion der Emission kann zur Verifizierung der beschriebenen Leuchtstoffe auch das zeitliche Verhalten der grünen bzw. NIR-Emission bewertet werden. Dabei lassen sich die An- und Abklingzeitkonstanten sowie das Verhältnis dieser Konstanten bestimmen und mit den zu erwartenden Werten vergleichen. Auch diese Werte sind durch Änderung der Konzentrationsverhältnisse bezüglich Leuchtstoff und/oder Dotierung in weiten Bereichen einstellbar. Typische Werte dieser Zeitkonstanten sind nachfolgend aufgeführt:

| | |
|---|---|
| SE₂O₂S:**Yb,Ho** | |
| Up-Conversion | (540 ... 560 nm) |
| | Anklingen: 200 ... 1500 µs |
| | Abklingen: 20 ... 500 µs |
| Down-Conversion | (1100 ... 1300 nm) |
| | Anklingen: 400 ... 1500 µs |
| | Abklingen: 500 ... 2000 µs |
| SE₂O₂S:**Yb,Er** | |
| Up-Conversion | (540 ... 560 nm) |
| | Anklingen: 50 ... 500 µs |
| | Abklingen: 20 ... 400 µs |

Bei einer abgewandelten Ausführungsform des Leuchtstoffs wird dieser nicht aus zwei Komponenten gemischt, sondern die Mischung erfolgt auf molekularer Ebene. Dies bedeutet, dass ein und dasselbe Wirtsgitter einerseits mit Ytterbium dotiert wird und andererseits die Codotierung teilweise mit Holmium und teilweise mit Erbium vorgenommen wird. Dieser Mischleuchtstoff lässt sich mit der folgender Formel beschreiben:

(SE_{1-x-y-x})₂O₂S:Ybₓ,Ho_{y},Er_{z}

wobei SE = mindestens eines der Metalle Y, La, Gd, Lu allein oder in Kombination
und 0,01<x<0,8 ; 0,0001<y<0,1 ; 0,0001<z<0,1

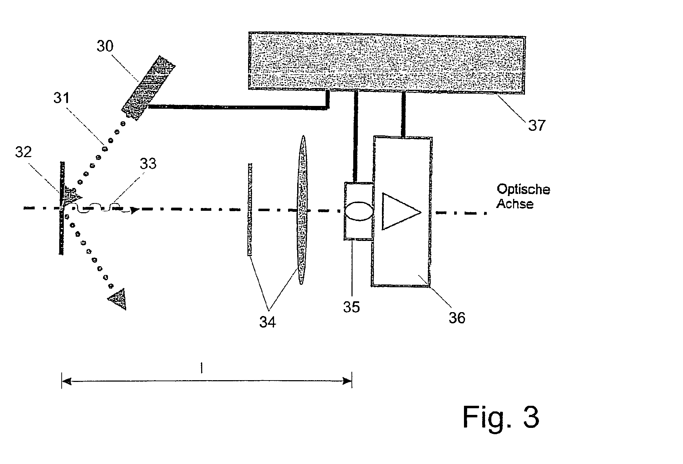

Fig. 3 zeigt eine Prinzipskizze einer Vorrichtung zur Echtheitserkennung von Sicherheitsmerkmalen, die einen Leuchtstoff der zuvor beschriebenen Art enthalten.

Die Leuchtstoffe sind ggf. mit weiteren Pigmenten vorzugsweise in eine Druckfarbe eingebracht. Die Leuchtstoffe liegen in der Druckfarbe in einer solchen Konzentration vor, dass ein Verdrucken der Farbe noch problemlos möglich ist. Die Gesamtkonzentration der Pigmente liegt dabei zwischen 0,01% und 40%, vorzugsweise zwischen 0,5 und 10%. Neben den Pigmentbestandteilen erhält die Druckfarbe ein oder mehrere geeignete Bindemittel und optional weitere Zusatzstoffe wie Lösemittel, Haftvermittler, Dispergierhilfen, Trocknungsbeschleuniger, Fotoinitiatoren und sonstige, in Druckfarben gebräuchliche Additive.

Als Druckverfahren prinzipiell geeignet sind alle in der Herstellung von Sicherheitserzeugnissen bzw. Verpackungsmaterialien gebräuchlichen Druckverfahren. Dazu zählen Offsetdruck, Lettersetdruck, Offset-Coating, Flexodruck, Siebdruck, Thermosublimationsdruck, Tiefdruck in den Ausführungen Stichtiefdruck und Rastertiefdruck, sowie Overprint-Varnish-Verfahren. Es können jedoch auch andere Beschichtungsverfahren wie beispielsweise Rakeln, Streichen, Stempeln, Gießverfahren oder Lackierverfahren angewendet werden.

Die Leuchtstoffe können auch dem Trägermaterial / Substrat von Sicherheitserzeugnissen als zusätzliches Additiv beigegeben werden. So können thermoplastisch verarbeitbare Kunststoffe durch Dotierung der Ausgangsmaterialien (Granulat) über die üblichen thermoplastischen Verfahren wie Extrudieren, Spritzgießen etc. zu abgesicherten Produkten verarbeitet werden. Aufgrund der chemisch/physikalischen Beständigkeit der Materialien bedarf es keiner besonderen Vorkehrungen. Weitere Einbringungsmöglichkeiten bestehen als zusätzliches Additiv in Papier oder Textilrohmassen zur Erzeugung von Papieren bzw. Fäden. Die Konzentration bei der Einbringung ist dabei so gewählt, dass sie das gewählte Verfahren (Extrusion, Kalandrierung, Spinnen) nicht nachhaltig beeinträchtigt. Die Konzentrationsgrenzen für zusätzliche Additive sind dem Fachmann bekannt und müssen daher nicht näher erläutert werden.

Die in Fig. 3 gezeigte Vorrichtung umfasst eine Anregungsquelle 30, bei der es sich vorzugsweise um einen HalbleiterLaser handelt. Die Anregungsquelle 30 sendet Anregungsstrahlung 31 aus, welche gegebenenfalls über optische Strahlformungs- und -lenkungsmittel (nicht dargestellt) ein zu prüfendes Sicherheitsmerkmal 32 erreicht. Bei dem Sicherheitsmerkmal 32 kann es sich beispielsweise um ein Sicherheitsetikett handeln, welches auf einer Warenverpackung aufgedruckt ist. Das Sicherheitsmerkmal kann in anderen Fällen auch die verwendete Druckfarbe sein, mit der die Verpackung einer Ware zumindest in bestimmten Bereichen beschichtet ist. Das Sicherheitsmerkmal kann aber auch in beliebig anderer Weise ein Trägersubstrat umfassen, welches die Leuchtstoffpartikel trägt.

Auf Grund der oben erläuterten Eigenschaften des Leuchtstoffs wird ausgehend vom Sicherheitsmerkmal 32 eine Prüfstrahlung 33 emittiert, die über optische Filter und Linsen 34 einem Sensor 35 zugeführt wird. Der Sensor 35 umfasst mindestens zwei Fotodetektoren, deren besondere Strahlungsempfindlichkeit in verschiedenen Wellenlängenbereichen liegt. Vorzugsweise ist ein In-Ga-As-Fotodetektor vorgesehen, um die Emission des Leuchtstoffs im nahen Infrarotbereich festzustellen (etwa bei 1.190 nm). Außerdem ist ein Si-Fotodetektor in den Sensor 35 integriert, welcher eine hohe Empfindlichkeit in dem Wellenlängenbereich aufweist, in dem die auf Grund des Up-Conversion-Effekts auftretenden Strahlungsmaxima zu erwarten sind. Natürlich können auch mehrere Fotodetektoren in den Sensor 35 integriert werden, wenn dies für eine bessere spektrale Auflösung der emittierten Strahlung 33 nützlich ist.

Dem Sensor 35 ist üblicherweise ein Verstärker 36 zugeordnet, welcher die verstärkten Messsignale an eine Auswerte- und Steuereinheit 37 übermittelt. Die Auswerte- und Steuereinheit 37 löst die Messsignale auf, um zu ermitteln, ob die emittierte Prüfstrahlung 33 neben der Hauptemission auch die weiter oben genannten Maxima enthält, die den jeweiligen Leuchtstoff charakterisieren. Insbesondere bei Verwendung des aus zwei Komponenten zusammengesetzten Leuchtstoffs ist eine hohe Spektralauflösung erforderlich, um das Triplett der nahe beieinander liegenden Strahlungsmaxima im grünen Wellenlängenbereich feststellen zu können. Mit den verfügbaren Messgeräten und Auswerteeinheiten ist diese Auflösung jedoch möglich.

Die optischen Filter und Linsen 34 enthalten einen Langpass-Kantenfilter, wobei eine Zusammenführung zu einer Si-Linse möglich ist, um das Strahlungsmaximum im nahen Infrarotbereich detektieren zu können.

Eine wesentliche Besonderheit der erläuterten Vorrichtung besteht darin, dass der Abstand zwischen dem zu prüfenden Sicherheitsmerkmal 32 und dem Sensor 35, der in der Fig. 3 durch die Strecke 1 bezeichnet ist, relativ groß bemessen sein kann. Auf Grund des verwendeten Leuchtstoffs ist ein Prüfabstand von mehr als 5 cm, der sich sogar bis auf 2 m erstrecken kann, realisierbar.

### Bezugszeichenliste

- 30: Anregungsquelle
- 31: Anregungsstrahlung
- 32: Sicherheitsmerkmal
- 33: Prüfstrahlung
- 34: Filter, Linsen
- 35: Sensor
- 36: Verstärker
- 37: Auswerte- und Steuereinheit

## Patentansprüche

1. Sicherheitsmerkmal zur Anbringung an Waren oder Dokumenten, welches ein Trägersubstrat und einen mit diesem verbunden Leuchtstoff umfasst, **dadurch gekennzeichnet, dass** der Leuchtstoff zumindest eine erste Leuchtstoffkomponente umfasst, die bei Anregung im nahen Infrarotbereich eine Anti-Stokes-Lumineszenz im grünen Spektralbereich und gleichzeitig eine Lumineszenz gemäß der Stokesschen Regel im energieärmeren Infrarotbereich zeigt, wobei die erste Leuchtstoffkomponente durch die folgende allgemeine Formel beschrieben ist:
(SE_{1-x-y})₂O₂S:Ybₓ,Ho_{y}
mit SE = mindestens eines der Metalle Y, La, Gd, Lu, jeweils allein oder in Kombination miteinander;
und mit 0,01<x<0,8 sowie 0,0001<y<0,1.

2. Sicherheitsmerkmal nach Anspruch 1, **dadurch gekennzeichnet, dass** der Leuchtstoff mindestens zwei Leuchtstoffkomponenten gemäß der angegebenen Formel umfasst, die sich in ihren chemischen Eigenschaften nur hinsichtlich der Werte der Indizes x und y unterscheiden.

3. Sicherheitsmerkmal nach Anspruch 1, **dadurch gekennzeichnet, dass** der Leuchtstoff eine zweite Leuchtstoffkomponente umfasst, wobei die zweite Leuchtstoffkomponente durch folgende allgemeine Formel beschrieben ist:
(SE₁₋ᵤ₋ᵥ)₂O₂S:Ybᵤ, Erᵥ
mit 0,01 < u < 0,8; 0,0001 < v < 0,1.

4. Sicherheitsmerkmal nach Anspruch 2 oder 3, **dadurch gekennzeichnet, dass** die beiden Leuchtstoffkomponenten zu etwa gleichen Anteilen vorliegen.

5. Sicherheitsmerkmal zur Anbringung an Waren oder Dokumenten, welches ein Trägersubstrat und einen mit diesem verbunden Leuchtstoff umfasst, **dadurch gekennzeichnet, dass** der Leuchtstoff ein Mischkristall ist, bei welchem ein gemeinsames Wirtsgitter mit Ytterbium dotiert und sowohl mit Holmium als auch mit Erbium kodotiert ist; wobei der Leuchtstoff bei Anregung im nahen Infrarotbereich eine Anti-Stokes-Lumineszenz im grünen Spektralbereich und gleichzeitig eine Lumineszenz gemäß der Stokesschen Regel im energieärmeren Infrarotbereich zeigt; und wobei der Mischkristall durch die folgende allgemeine Formel beschrieben ist: (SE_{1-x-y-z})₂O₂S:Ybₓ,Ho_{y},Er_{z} mit SE = mindestens eines der Metalle Y, La, Gd, Lu, jeweils allein oder in Kombination miteinander; und mit 0,01<x<0,8 ; 0,0001<y<0,1 ; 0,0001<z<0,1

6. Sicherheitsmerkmal nach einem der Ansprüche 3 bis 5, **dadurch gekennzeichnet, dass** der Leuchtstoff bei einer schmalbandigen Anregung im Bereich von etwa 950 nm oder 980 nm ein Emissionsmaxima im grünen Wellenlängenbereich aufweist, welches aus Emissionsanteilen von beiden Leuchtstoffkomponenten bzw. aus der Emission der Mischkristalle resultiert, und dass die entsprechenden Emissionsspektren zumindest zwei weitere Nebenmaxima im grünen Wellenlängenbereich aufweisen.

7. Sicherheitsmerkmal nach einem der Ansprüche 1 bis 6, **dadurch gekennzeichnet, dass** das Trägersubstrat als Etikett ausgebildet ist.

8. Sicherheitsmerkmal nach einem der Ansprüche 1 bis 6, **dadurch gekennzeichnet, dass** das Trägersubstrat eine Druckfarbe ist, die auf Dokumente, Waren oder deren Verpackungen dauerhaft haltbar aufbringbar ist.

## Claims

1. A security feature for attachment to goods or documents comprising a support substrate and a luminescent material connected therewith, **characterized in that** the luminescent material comprises at least a first luminescent component that shows upon excitation in the near infrared range an anti-Stokes luminescence in the green spectral range and simultaneously a luminescence according to Stokes' rule in the energy-poorer infrared range, the first luminescent component being described by the following general formula:
(SE_{1-x-y})₂O₂S:Ybₓ,Ho_{y}
with SE = at least one of the metals Y, La, Gd, Lu, in each case alone or in combination with one another;
and with 0.01 < x < 0.8 and 0.0001 < y < 0.1.

2. A security feature according to claim 1, **characterized in that** the luminescent material comprises at least two luminescent components according to the specified formula that differ in their chemical properties only with regard to the values of the indices x and y.

3. A security feature according to claim 1, **characterized in that** the luminescent material comprises a second luminescent component, the second luminescent component being described by the following general formula:
(SE₁₋ᵤ₋ᵥ)₂O₂S:Ybᵤ,Erᵥ
with 0.01 < u < 0.8; 0.0001 < v < 0.1.

4. A security feature according to claim 2 or claim 3, **characterized in that** the two luminescent components are present in approximately equal amounts.

5. A security feature for attachment to goods or documents comprising a support substrate and a luminescent material connected therewith, **characterized in that** the luminescent material is a mixed crystal, wherein a common host lattice is doped with ytterbium and co-doped with both holmium and erbium; the luminescent material showing upon excitation in the near infrared range an anti-Stokes luminescence in the green spectral range and simultaneously a luminescence according to Stokes' rule in the energy-poorer infrared range; and the mixed crystal being described by the following general formula:
(SE_{1-x-y-z})₂O₂S:Ybₓ, Ho_{y},Er_{z}
with SE = at least one of the metals Y, La, Gd, Lu, in each case alone or in combination with one another;
and with 0.01 < x 0.8; 0.0001 < y < 0.1; 0.0001 < z < 0.1.

6. A security feature according to any one of claims 3 to 5, **characterized in that** with a narrow band excitation in the range of approximately 950 nm or 980 nm, the luminescent material has an emission maximum in the green wavelength range resulting from emission portions of both luminescent components or from the emission of the mixed crystal, and the respective emission spectra have at least two additional minor maxima in the green wavelength range.

7. A security feature according to any one of claims 1 to 6, **characterized in that** the support substrate is designed as label.

8. A security feature according to any one of claims 1 to 6, **characterized in that** the support substrate is a printing ink that can be lastingly applied to documents, goods, or packaging thereof.

## Revendications

1. Dispositif de sécurité destiné à équiper des produits ou des documents, ledit dispositif comprenant un substrat de support et un luminophore étant lié à ce dernier, **caractérisé en ce que** ledit luminophore comprend au moins un premier composant luminescent qui, lorsqu'il est excité par un rayonnement d'infrarouge proche, montre une luminescence anti-Stokes dans domaine spectral vert et, en même temps, une luminescence dans le domaine infrarouge moins énergétique qui correspond au déplacement de Stokes, le premier composant luminescent étant décrit par la formule générale suivante :
(SE_{1-x-y})₂O₂S : Ybₓ, Ho_{y}
avec SE = au moins un des métaux Y, La, Gd, Lu, chacun d'entre eux pouvant être mis en oeuvre seul ou en combinaison avec les autres ;
et avec 0,01 < x < 0,8 ainsi que 0,0001 < y < 0,1.

2. Dispositif de sécurité selon la revendication 1, **caractérisé en ce que** le luminophore comprend au moins deux composants luminescents selon la formule indiquée, les propriétés chimiques desdits composants n'étant différentes qu'au niveau des valeurs que prennent les indices x et y.

3. Dispositif de sécurité selon la revendication 1, **caractérisé en ce que** le luminophore comprend un deuxième composant luminescent, ledit deuxième composant luminescent étant décrit par la formule générale suivante:
(SE₁₋ᵤ₋ᵥ)₂O₂S : Ybᵤ, Erᵥ
avec 0,01 < u < 0,8 ; 0,0001 < v < 0,1.

4. Dispositif de sécurité selon les revendications 2 ou 3, **caractérisé en ce que** les deux composants luminescents sont présents dans des proportions quasiment égales.

5. Dispositif de sécurité destiné à équiper des produits ou des documents, ledit dispositif comprenant un substrat de support et un luminophore étant lié à ce dernier, **caractérisé en ce que** ledit luminophore est une solution solide au sein de laquelle un réseau hôte commun est dopé à l'ytterbium, l'holmium et l'erbium étant présents comme co-dopants ; le luminophore montrant, lorsqu'il est excité par un rayonnement d'infrarouge proche, une luminescence anti-Stokes dans domaine spectral vert et, en même temps, une luminescence dans le domaine infrarouge moins énergétique qui correspond au déplacement de Stokes ; et ladite solution solide étant décrite par la formule générale suivante :
(SE_{1-x-y-z})₂O₂S : Ybₓ,Ho_{y},Er_{z}
avec SE = au moins un des métaux Y, La, Gd, Lu, chacun d'entre eux pouvant être mis en oeuvre seul ou en combinaison avec les autres ;
et avec 0,01 < x < 0,8 ; 0,0001 < y < 0,1 ;
0,0001 < z < 0,1

6. Dispositif de sécurité selon l'une des revendications 3 à 5, **caractérisé en ce que** le luminophore présente, lorsqu'il est excité dans une bande étroite située environ entre 950 nm et 980 nm, un maximum d'émission dans la gamme de longueurs d'onde correspondant à la lumière verte, ledit maximum résultant de l'addition des émissions provoquées par les deux composants luminescents ou, respectivement, de l'émission provoquée par les solutions solides, et que les spectres d'émission correspondants présentent au moins deux autres maxima secondaires dans la gamme de longueurs d'onde correspondant à la lumière verte.

7. Dispositif de sécurité selon l'une des revendications 1 à 6, **caractérisé en ce que** le substrat de support se présente sous forme d'une étiquette.

8. Dispositif de sécurité selon l'une des revendications 1 à 6, **caractérisé en ce que** le substrat de support est une encre d'imprimerie pouvant être appliquée d'une manière durable sur des documents, des produits ou sur leurs emballages.
